# EUROPEAN PATENT APPLICATION

(11) **EP 3 439 344 A1**
(43) Date of publication of application: **06.02.2019**
(21) Application number: 17400048.9
(22) Date of filing: 03.08.2017
(51) Int. Cl.: H04W 12/02, H04L 29/06, H04L 9/32

(54) **REGISTERING USER EQUIPMENT TO A VISITED PUBLIC LAND MOBILE NETWORK**

(71) Applicant: Nokia Technologies Oy, 02610 Espoo (FI)
(72) Inventor: Jerichow, Anja, 85567 Grafing (DE); Horn, Günther, 80331 München (DE)
(74) Representative: Espatent Oy

(57) **Abstract**

User equipment is registered to a visited public land mobile network, VPLMN. The VPLMN receives from the user equipment a concealed identifier comprising, in an encrypted form, a long-term identifier and a replay attack protector. The VPLMN further receives from the user equipment a cryptographic hash result of identity proof information. The identity proof information consists of the replay attack protector or comprises the concealed identifier and the long-term identifier. The VPLMN passes the concealed identifier to a home public land mobile network, HPLMN. The VPLMN obtains from the HPLMN the long-term identifier and the replay attack protector or long-term identifier of the identity proof information. The VPLMN computes a local cryptographic hash result of the proof information and continues the registering of the user equipment only if the local cryptographic hash result matches the cryptographic hash result received from the user equipment.

## Description

### TECHNICAL FIELD

The present application generally relates to registering user equipment to a visited public land mobile network In particular, though not exclusively, the present application relates to lawful interception in visited networks.

### BACKGROUND

This section illustrates useful background information without admission of any technique described herein representative of the state of the art.

Public Land Mobile Networks (PLMN) have greatly evolved during past decades from rudimentary voice communication enablers to mobile broadband Internet devices. Currently, a fifth generation of mobile networks is being designed e.g. by further developing the Long-Term Evolution (LTE). Common for both voice and data communications, the communications are encrypted for maintenance of privacy of the users. However, there is a need to enable societies to protect themselves or investigate crimes by means of legal interception in which legal authorities are allowed to receive communication of an intercepted subscriber without normal encryption of the PLMN.

In mobile communications, there are typically two independent identities for each subscriber: an identifier of the User Equipment (UE) that identifies e.g. a phone make and model, and a subscription identity that identifies a particular subscription of a PLMN. Typical examples of the UE and subscription identifiers are an International Mobile Equipment Identity (IMEI) and an International Mobile Subscriber Identity (IMSI). Each mobile phone user, or mobile broadband device, needs to pay for the service and the subscription assigns the costs of the use to the respective pre-payments or credit contract made by a payee. Moreover, the subscription determines a phone number in use so that the user of the subscription and only that user should be able to place calls and receive calls with that phone number. As of GSM, the subscription and UE identifications have been separate so that different subscriptions can be used in one UE and vice versa. The UE identification helps to recover stolen mobile phones, for example.

Mobile communications impose particular challenges for authenticating the true subscriber, which is important both for authenticating a subscriber to avoid abuse of a subscription of someone else and also for the lawful interception. It is yet desirable to avoid over-the-air exchange of any long-term subscriber identity of the subscription at all by use of a temporary subscriber identity to further improve privacy of the users. The temporary subscriber identity is only known by the home PLMN i.e. HPLMN and the subscriber's subscription module. However, mobile communications is also enabled in visited PLMNs i.e. VPLMNs so as to avoid roaming and the concealing of the subscriber identity prevents lawful interception of that subscriber in particular.

For lawful interception, it suffices if any long-term identifier is known relating to the UE used for communication. The UE identity such as the IMEI and/or the subscriber identity such as the IMSI or MISISDN (Mobile Station International ISDN Number) can be used to target lawful interception as desired. A long-term identifier is used in this document generally for reference to any identifier with which legal interception can be targeted to a desired user equipment or subscription. A concealed identifier is used in this document generally for reference to any identifier that is configured to indicate the long-term identifier in a concealed manner hindering third parties from determining the long-term identifier.

Various solutions have been proposed for indicating the long-term identifier to the VPLMN.

In an alternative A that the HPLMN informs the VPLMN of the long-term identifier after having authenticated a UE on behalf of the VPLMN. The HPLMN would send the long-term identifier to the VPLMN in a separate message or piggy-backed to an existing message.

In an alternative B the HPLMN furnishes the VPLMN with an authentication vector so that the VPLMN can take care of the authentication of the UE for the HPLMN. The VPLMN then informs the HPLMN of successful authentication and responsively receives the long-term identifier as in alternative A from the HPLMN,

In an alternative C, the VPLMN receives the authentication vector from the HPLMN as in alternative B, but also receives at the same time the IMSI from the HPLMN. The VPLMN may verify the IMSI with the UE using a yet further alternative D.

In the alternative D, the VPLMN verifies the IMSI from the UE by an identity request message and respective response after the authentication has been performed so that there is an encrypted radio connection with the UE. The received IMSI is then compared with the version received from the HPLMN in order to verify that the HPLMN has been truthful.

In an alternative E the VPLMN verifies the IMSI during authentication process in the following way: the UE produces a new signed response as a cryptographic function of a normal session related signed response XRES and the IMSI. The VPLMN runs the same cryptographic function of the XRES and the IMSI received from the HPLMN in alternative C during the authentication of the UE by the VPLMN.

In an alternative E', the VPLMN operates as in alternative E except that a new anonymity key is computed by the UE and by the VPLMN and the UE encrypts the IMSI with this new anonymity key and then sends with such encryption to the VPLMN for verifying.

The inventor of the present invention has realized that the known techniques require either or both entrusting the VPLMN to perform the authentication of the UE and sending an additional pair of radio messages in order verify the long-term identifier of the UE.

### SUMMARY

Various aspects of examples of the invention are set out in the claims.

According to a first example aspect of the present invention, there is provided a method for registering user equipment to a visited public land mobile network, VPLMN, comprising:
receiving by the VPLMN from the user equipment a concealed identifier comprising, in an encrypted form, a long-term identifier and a replay attack protector;
receiving by the VPLMN from the user equipment a cryptographic hash result of identity proof information;
wherein the identity proof information comprises the replay attack protector or the identity proof information comprises the concealed identifier and the long-term identifier;
passing by the VPLMN the concealed identifier to a home public land mobile network, HPLMN;
obtaining by the VPLMN from the HPLMN the long-term identifier and the replay attack protector or long-term identifier of the identity proof information;
computing by the VPLMN a local cryptographic hash result of the proof information; and
continuing the registering of the user equipment by the VPLMN only if the local cryptographic hash result matches the cryptographic hash result received from the user equipment.

The identity proof information may consist of the replay attack protector. Alternatively or additionally, the identity proof information may comprise the concealed identifier and the long-term identifier. The identity proof information may consist of the concealed identifier, the long-term identifier and at least a portion of the replay attack protector and of optional padding. Alternatively, the identity proof information may consist of the concealed identifier and the long-term identifier.

The method may further comprise receiving by the VPLMN from the user equipment a cryptographic hash result of the replay attack protector and a cryptographic hash result of both the concealed identifier and the long-term identifier in a registering message. The registering message may be an attach request message. The registering message may be received by the VPLMN before any radio bearer encryption information has been transmitted by the VPLMN to the user equipment, such as a challenge of an authentication vector.

The cryptographic hash function may be a public cryptographic hash function. The cryptographic hash function may be a one-way hash function. The cryptographic hash function may be or employ any one or more of: a universal hash function; a keyed cryptographic hash function; and an unkeyed cryptographic hash function.

The method for registering the user equipment may comprise transfer of the replay attack protector between the VPLMN and the user equipment only with cryptographic protection resulting from encryption or cryptographic hashing.

The method may comprise using the replay attack protector as the identity proof information for user equipment that use the replay attack protector as their identity proof information and using the concealed identifier and the long-term identifier as parts of the identity proof information for user equipment that use such the concealed identifier and the long-term identifier as parts of the identity proof information. The VPLMN may detect the identity proof information used by the UE and the HPLMN by blind detection. Blind detection refers in this document to that there is no prior knowledge based on which parameter or parameters the cryptographic hashing has been performed and one of possible alternatives is first used to compute a candidate comparison result for testing and if a match is found, the correct parameter or parameters has been used and also the long-term identifier has been verified.

The VPLMN may be aware of the encryption key with which the long-term identifier has been encrypted. The VPLMN may confirm the correctness of the long-term identifier by decrypting the concealed identifier in addition or instead of comparing the hash results on meeting a confirmation condition. The confirmation condition may comprise any one or more of: meeting a random check condition; identifying suspicious traffic from the user equipment or from the HPLMN; and free processing capacity at the VPLMN meeting a given level.

The replay attack protector may be configured to prevent re-use of earlier captured messages by third parties. The replay attack protector may comprise an arbitrary code for using only once. The replay attack protector may be configured to be used more than once by the user equipment by a likelihood less than once per million replay attack protectors. The replay attack protector may comprise a sequential counter maintained by the user equipment. The replay attack protector may comprise a time value expressed as a number of time intervals starting of a given date and time such as seconds elapsed since a given date and time.

According to a second example aspect of the present invention, there is provided a method for registering user equipment to a visited public land mobile network, VPLMN, comprising:
computing at the user equipment a concealed identifier comprising, in an encrypted form, a long-term identifier and a replay attack protector;
computing at the user equipment a cryptographic hash result of identity proof information that comprises a replay attack protector or that comprises the concealed identifier and the long-term identifier; and
sending by the user equipment to the VPLMN the concealed identifier and the cryptographic hash result of the identity proof information.

The replay attack protector may be independently generated at the user equipment. The replay attack protector may be randomized at the user equipment. The replay attack protector may be randomized by the user equipment. The replay attack protector may be randomized by a subscriber identity module accessible by the user equipment.

The method may further comprise computing at the user equipment a cryptographic hash result of the replay attack protector and a cryptographic hash result of both the concealed identifier and the long-term identifier. The method may further comprise sending by the user equipment to the VPLMN the cryptographic hash result of the replay attack protector and the cryptographic hash result of both the concealed identifier and the long-term identifier.

According to a third example aspect of the present invention, there is provided a network element for a visited public land mobile network, VPLMN, for registering user equipment to the VPLMN and comprising:

an input for receiving from the user equipment a concealed identifier comprising, in an encrypted form, a long-term identifier and a replay attack protector, and for receiving from the user equipment a cryptographic hash result of identity proof information;

wherein the identity proof information comprises the replay attack protector or the identity proof information comprises the concealed identifier and the long-term identifier;

an inter-network communication interface for passing the concealed identifier to a home public land mobile network, HPLMN, and for obtaining from the HPLMN the long-term identifier and the replay attack protector or the long-term identifier of the identity proof information;
at least one processor for computing a local cryptographic hash result of the identity proof information; and
the at least one processor being configured to allow continuing the registering of the user equipment only if the local cryptographic hash result matches the cryptographic hash result received from the user equipment.

The inter-network communication interface may comprise a cryptography block configured to encrypt and decrypt information sent to and received from the HPLMN. The inter-network communication interface may comprise a communication port. The communication port may comprise the input.

According to a fourth example aspect of the present invention, there is provided a mobile terminal comprising user equipment configured to perform registering to a visited public land mobile network, VPLMN, comprising:
at least one processor configured to:
compute a concealed identifier comprising, in an encrypted form, a long-term identifier and a replay attack protector; and
compute a cryptographic hash result of identity proof information that comprises a replay attack protector or that comprises the concealed identifier and the long-term identifier; and
a transmitter configured to send to the VPLMN the concealed identifier and the cryptographic hash result of the identity proof information.

According to a fifth example aspect of the present invention, there is provided a computer program comprising computer executable program code configured to execute any method of the first or second example aspect.

The computer program may be stored in a computer readable memory medium.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

According to a sixth example aspect of the present invention, there is provided an apparatus comprising a memory and at least one processor that are configured to cause the apparatus to perform the method of the first or second example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows a flow chart of a process of an example embodiment;
Fig. 3 shows a block diagram of an apparatus of an example embodiment; and
Fig. 4 shows a block diagram of another apparatus of an example embodiment.

### DETAILED DESCRIPTON OF THE DRAWINGS

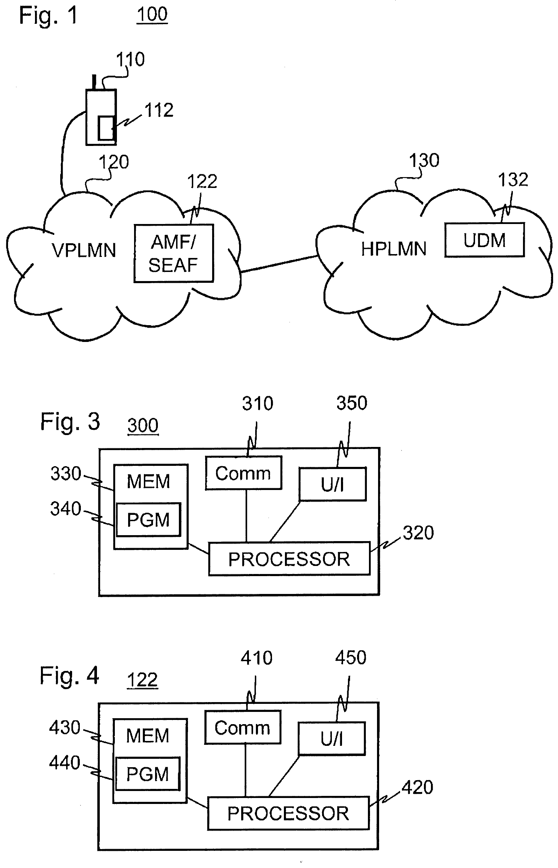

An example embodiment of the present invention and its potential advantages are understood by referring to Figs. 1 through 4 of the drawings. In this document, like reference signs denote like parts or steps.

Fig. 1 shows an architectural drawing of a system 100 of an example embodiment. The system 100 comprises User Equipment (UE) 110 that includes a subscriber module 112 (e.g. a SIM or USIM) either as a hardware or software implemented function. It is irrelevant for many embodiments of the present invention whether particular operation at the UE 110 is performed purely by a User Equipment when understood without the subscriber module 112, by the subscriber module 112, or collectively by the UE 110 and the subscriber module 112. In sake of simplicity, action at the UE 110 may be described with an intent to cover acts taken by either or both the UE 110 and the subscriber module 112.

The system 100 further comprises a Visited Public Land Mobile Network (VPLMN) 120 that includes a network element 122 such as Core Access and Mobility Management Function (AMF) or a security anchor function (SEAF). Notice that the network element 122 need not be solely for performing the functions disclosed herein but the network element 122 may further be configured to perform various other functions. In practice, the network element 122 may be formed of one or more parts of the VPLMN 120 and/or software run by the VPLMN. Hence, the network element 122 should be understood broadly.

The system 100 further comprises a Home Land Mobile Network (HPLMN) 130. The HPLMN comprises in an example embodiment a Unified Data Management (UDM) function 132.

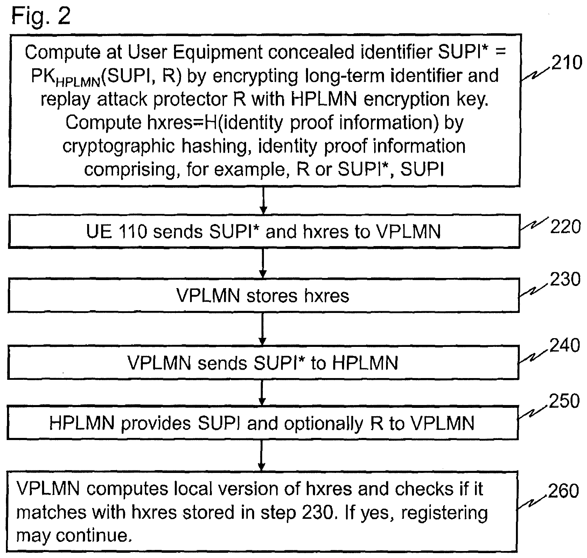

The terms visited and home Land Mobile Network refer to the role of the network in question with regard to the UE 110 or more particularly with regard to the subscription of the UE 112. The Land Mobile Network whose subscriber the UE 110 is (e.g. based on its current subscriber module 112) is denoted as the HPLMN and a Land Mobile Network to which the UE 110 has roamed is denoted as the VPLMN. At any one time, typical Land Mobile Networks act for some subscribers as the HPLMN and for some other subscribers as the VPLMN. Fig. 2 shows a flow chart of a process of an example embodiment.

In step 210, a concealed identifier SUPI* is computed at the User Equipment 110, optionally within a subscriber module using a long-term identifier SUPI e.g. as SUPI* = PK_{HPLMN}(SUPI, R) and possibly including additional parameters as further input for the encryption. The denotation PK_{HPLMN}() indicates encryption of the parameters indicated within parenthesis using an encryption key PK_{HPLMN} of the HPLMN. R designates a replay attack protector such as a cryptographic nonce, e.g. an arbitrary or random number or code.

Further, in step 210, either simultaneously or before or after the computing of the long-term identifier, an expected hash response is computed at the UE 110 by computing a cryptographic hash of identity proof information that comprises the replay attack protector or both the concealed and long-term identifiers, e.g. as hxres=H(R) or as hxres=H(SUPI*, SUPI) (optionally also using R for computing the hxres in addition to SUPI*, SUPI). The Expected hash response hxres is included in an in initial registration message of the UE 110 in an example embodiment. H denotes a cryptographic hash function configured to hinder determination of source information from the result of the hash code.

Notice that in the encryption and hashing examples of preceding paragraphs, two parameters were jointly used as a source of a cryptographic function (encryption or hashing). Comma as a delimiter is only intended to distinguish the different parameters, but these parameters can be combined in any manner and order as per implementation. For example, the parameters can be concatenated, each character can be summed up and perhaps a modulo of e.g. 255 can be taken, the parameters can be combined with XOR etc.

In step 220, the UE 110 sends the concealed identifier SUPI* and hxres to the VPLMN 120, for example to the network element 122.

In step 230, the VPLMN 120 stores (e.g. by the network element 122) the H(R).

In step 240, the VPLMN 120 sends the concealed identifier to the HPLMN 130. In an example embodiment, the following steps that are performed in the HPLMN are performed by a Unified Data Management (UDM) function of the HPLMN.

Depending on implementation, the HPLMN 130 performs itself authentication of the UE 110 (or with the UE) or issues an authentication vector AV to the VPLMN 120 to delegate this task to the VPLMN 120. The authentication may involve e.g. an Authentication and Key Agreement, AKA, process.

In step 250, during or after authentication, the HPLMN 130 provides the SUPI and R (at least if the hxres was formed by hashing R) to the VPLMN 120, e.g. to the network element 122.

In step 260, the VPLMN 120 or therein the network element 122 checks probable correctness of the SUPI. If the HPLMN is truthful, calculation of local version of hxres matches that stored in step 230.

In an example embodiment, the VPLMN 120 has been informed by the UE 110 or the HPLMN 120 of the source of the identity proof information used by the UE 110 in question. In that case, the VPLMN 120 computes its local version of hxres readily with the correct parameters. The informing of the source of the identity proof information may be indirectly performed by omitting the replay attack protector by the HPLMN in case the long-term identifier and the conceal identifier have been used in the identity proof information and the replay attack protector is not needed for computing the hxres. Alternatively, if the VPLMN 120 is not aware of the implementation used by the UE 110, the VPLMN may perform blind detection by first testing whether hxres(R) matches the hxres received from the UE 110 and stored in step 120. If there are more than two different alternatives for the source of the hash result, then the blind detection comprises attempting another alternative source and if that matches, deducing that was the correct source and also the identity proof information hashing has proven the correctness of the long-term identifier.

Fig. 3 shows a block diagram of an apparatus 300 such as a public land mobile network terminal according to an embodiment of the invention.

The apparatus 300 comprises a memory 330 including a persistent computer program code 340. The apparatus 300 further comprises a processor 320 for controlling the operation of the apparatus 300 using the computer program code 340, a communication unit 310 for communicating with various local devices and with the public land mobile networks. The communication unit 310 comprises, for example, a local area network (LAN) port; a wireless local area network (WLAN) unit; Bluetooth unit; cellular communication unit; or satellite communication unit. The processor 320 comprises, for example, any one or more of: a master control unit (MCU); a microprocessor; a digital signal processor (DSP); an application specific integrated circuit (ASIC); a field programmable gate array; and a microcontroller. The apparatus 300 optionally comprises a user interface 350.

Fig. 4 shows a block diagram of the network element 122 according to an embodiment of the invention. The network element may be formed of a *server* computer and suitable software. The network element 122 may comprise parallel components for improving resilience and/or speed of the network element 122.

The network element 122 comprises a memory 430 including a persistent computer program code 440. The network element 122 further comprises a processor 420 for controlling the operation of the network element 122 using the computer program code 440, a communication unit 410 for communicating with other networks and user equipment. The communication unit 410 comprises, for example, one or more local area network (LAN) ports. The processor 420 comprises, for example, any one or more of: a master control unit (MCU); a microprocessor; a digital signal processor (DSP); an application specific integrated circuit (ASIC); a field programmable gate array; and a microcontroller.

Without in any way limiting the scope, interpretation, or application of the claims appearing below, a technical effect of one or more of the example embodiments disclosed herein is that possibility for lawful interception in a visited public land mobile network can be verified with fair degree of reliability with little computational cost and without need for new radio message signals over downlink. Another technical effect of one or more of the example embodiments disclosed herein is that the long-term identifier of user equipment can be verified by the visited public land mobile network with fair degree of reliability with the same process regardless which network actually performs an authentication process of the user equipment on registering the user equipment. Yet another technical effect is that the possibility of lawful interception may be tested so that the association of the long-term identifier and the concealed identifier is verifiable without need to transfer the long-term identifier over air interface without encryption even before any encrypted radio bearer is formed for the UE by the VPLMN. Yet further technical effect is that the possibility of lawful interception may be tested so that the association of the long-term identifier and the concealed identifier is verifiable without need to transfer the long-term identifier over air interface without encryption even before any encrypted radio bearer is formed for the UE by the VPLMN and without exposing the long-term identifier to brute force attacks.

Embodiments of the present invention may be implemented in software, hardware, application logic or a combination of software, hardware and application logic. The software, application logic and/or hardware may reside entirely or in part on a memory of the apparatus 300 or the network element 122. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 4. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method for registering user equipment to a visited public land mobile network, VPLMN, comprising:
receiving by the VPLMN from the user equipment a concealed identifier comprising, in an encrypted form, a long-term identifier and a replay attack protector;
receiving by the VPLMN from the user equipment a cryptographic hash result of identity proof information;
wherein the identity proof information the replay attack protector or the identity proof information comprises the concealed identifier and the long-term identifier;
passing by the VPLMN the concealed identifier to a home public land mobile network, HPLMN;
obtaining by the VPLMN from the HPLMN the long-term identifier and the replay attack protector or long-term identifier of the identity proof information;
computing by the VPLMN a local cryptographic hash result of the proof information; and
continuing the registering of the user equipment by the VPLMN only if the local cryptographic hash result matches the cryptographic hash result received from the user equipment.

2. A method for registering user equipment to a visited public land mobile network, VPLMN, comprising:
computing at the user equipment a cryptographic hash result of a replay attack protector and a concealed identifier comprising, in an encrypted form, a long-term identifier and the replay attack protector;
computing at the user equipment a cryptographic hash result of identity proof information that comprises a replay attack protector or that comprises the concealed identifier and the long-term identifier; and
sending by the user equipment to the VPLMN the concealed identifier and the cryptographic hash result of the identity proof information of a replay attack protector and the concealed identifier.

3. A network element for a visited public land mobile network, VPLMN, for registering user equipment to the VPLMN and comprising:
an input for receiving from the user equipment a concealed identifier comprising, in an encrypted form, a long-term identifier and a replay attack protector, and for receiving from the user equipment a cryptographic hash result of identity proof information;
wherein the identity proof information comprises the replay attack protector or the identity proof information comprises the concealed identifier and the long-term identifier;
an inter-network communication interface for passing the concealed identifier to a home public land mobile network, HPLMN, and for obtaining from the HPLMN the long-term identifier and the replay attack protector or long-term identifier of the identity proof information;
at least one processor for computing a local cryptographic hash result of the identity proof information; and
the at least one processor being configured to allow continuing the registering of the user equipment only if the local cryptographic hash result matches the cryptographic hash result received from the user equipment.

4. A mobile terminal comprising user equipment configured to perform registering to a visited public land mobile network, VPLMN, comprising:
at least one processor configured to:
compute a concealed identifier comprising, in an encrypted form, a long-term identifier and a replay attack protector; and
compute a cryptographic hash result of identity proof information that comprises a replay attack protector or that comprises the concealed identifier and the long-term identifier; and
a transmitter configured to send to the VPLMN the concealed identifier and the cryptographic hash result of the identity proof information.

5. The method of claim 1 or 2, the network element of claim 3 or a mobile terminal of claim 4, wherein the identity proof information comprises the replay attack protector.

6. The method of any one of claims 1, 2, or 5, the network element of claim 3 or a mobile terminal of claim 4, wherein the replay attack protector is randomized at the user equipment.

7. The method of any one of claims 1, 2, 5 or 6, the network element of claim 3 or a mobile terminal of claim 4, wherein the identity proof information comprises the long-term identifier.

8. The method of any one of claims 1, 2, 5, 6 or 7, the network element of claim 3 or a mobile terminal of claim 4, wherein the identity proof information comprises the concealed identifier.

9. The method of any one of claims 1, 2, 5, 6, 7 or 8, the network element of claim 3 or a mobile terminal of claim 4, wherein the identity proof information consists of the replay attack protector.

10. The method of any one of claims 1, 2, 5, 6, 7,8 or 9, the network element of claim 3 or a mobile terminal of claim 4, wherein the hash result is a public cryptographic hash function result.

11. The method of any one of claims 1, 2, 5, 6, 7, 8, 9 or 10, the network element of claim 3 or a mobile terminal of claim 4, wherein the replay attack protector comprises an arbitrary code.

12. The network element of claim 3 or any one of claims 5 to 11, wherein the inter-network communication interface comprises a cryptography block configured to encrypt and decrypt information sent to and received from the HPLMN.

13. A computer program comprising computer executable program code configured to execute the method of any one of claims 1, 2, 5, 6, 7, 8, 9, 10 or 11 when executed by an apparatus.

14. A computer readable memory medium comprising the computer program of claim 13.

15. An apparatus comprising a memory and at least one processor that are configured to cause the apparatus to perform the method of any one of claims 1, 2, 5, 6, 7, 8, 9, 10 or 11.
